Europäisches Patentamt

(19) European Patent Office

Office européen des brevets

(11) Veröffentlichungsnummer: **0 010 643**
**B1**

# (12) EUROPÄISCHE PATENTSCHRIFT

(45) Veröffentlichungstag der Patentschrift:
25.11.81

(21) Anmeldenummer: 79103811.0

(22) Anmeldetag: 05.10.79

(51) Int. Cl.³: **C 01 F 5/24,** C 01 F 11/18 //
C09C1/02

(54) Verfahren zur Herstellung einer wässrigen Suspension von Carbonaten des Calciums oder/und Magnesiums aus Dolomit.

(30) Priorität: 30.10.78 DE 2847205

(43) Veröffentlichungstag der Anmeldung:
14.05.80 Patentblatt 80/10

(45) Bekanntmachung des Hinweises auf die Patenterteilung:
25.11.81 Patentblatt 81/47

(84) Benannte Vertragsstaaten:
AT BE CH FR GB IT NL SE

(56) Entgegenhaltungen:
AT-B-145 809
CH-A-188 612
DE-A1-2 600 485
DE-C-259 627
DE-C-267 543
DE-C-715 256

(73) Patentinhaber: VEREINIGTE ALUMINIUM-WERKE
AKTIENGESELLSCHAFT,
Postfach 2468 Georg-von-Boeselager-Strasse 25,
D-5300 Bonn 1 (DE)

(72) Erfinder: Schultze, Werner, Dr., Brüsseler Strasse 60a,
D-5300 Bonn 1 (DE)
Erfinder: Kendzlora, Heinz, Memelweg 5,
D-5300 Bonn-Tannenbusch (DE)
Erfinder: Nenner, Johann, Mozartstrasse 3, Merten,
D-5303 Bornheim 3 (DE)

(74) Vertreter: Müller-Wolff, Thomas, Dipl.-Ing.,
Georg-von-Boeselager-Strasse 25 Postfach 2468,
D-5300 Bonn 1 (DE)

## Verfahren zur Herstellung einer wäßrigen Suspension von Carbonaten des Calciums oder/und Magnesiums aus Dolomit

Die Erfindung betrifft ein Verfahren zur Herstellung einer wäßrigen Suspension von Carbonaten des Calciums oder/und Magnesiums, insbesondere von basischem Magnesiumcarbonat oder basischem Calcium-Magnesium-Carbonat.

Ein Verfahren dieser Art ist bereits in der DE-A-2 600 485 beschrieben. Danach wird Dolomit nach Erhitzen auf etwa 1000 bis 1100°C in ein Gemisch von Calciumoxid und Magnesiumoxid umgewandelt, das Oxidgemisch in Wasser suspendiert und in die Suspension Kohlendioxid eingeleitet. Die Suspension wird über Zentrifugen oder Filterpressen eingeengt und durch Zugabe eines Dispergiermittels eine stabile Suspension mit hohem Feststoffgehalt hergestellt. Die stabile Suspension enthält üblicherweise 32 Gew.-% Trockenstoff, wobei 2,2 Gew.-% Dispergiermittel zugesetzt werden müssen. Nach einer nochmaligen Trocknung des basischen Calcium-Magnesium-Carbonats kann der Trockenstoffgehalt auf 54 Gew.-% gesteigert werden. Zur Herstellung einer stabilen Suspension werden dann allerdings schon mehr als 6 Gew.-% Dispergiermittel benötigt.

Bei dem bekannten Verfahren liegen die Feststoffe überwiegend als dünne, plättchenförmige Magnesiumcarbonate mit einem hohen Shape-Faktor von mindestens 1 : 80 vor. Der Shape-Faktor gibt dabei das Verhältnis von Dicke zu mittlerem Durchmesser eines flächigen Kristalls an. Ein hoher Shape-Faktor bedeutet demnach eine im Verhältnis zum mittleren Durchmesser geringe Dicke der plättchenförmigen Magnesiumcarbonate.

Aufgabe der vorliegenden Erfindung ist es, in einer stabilen Suspension aus überwiegend plättchenförmigen, basischen Calcium-Magnesium-Carbonaten und Wasser den Trockenstoffanteil bei gleichzeitig verringerter Dispergiermittelmenge zu erhöhen. Dieses wird erfindungsgemäß durch die in den Patentansprüchen angegebenen Merkmale erreicht. Die Suspension weist nach dem Filterpressen einen Trockenstoffanteil von 44 Gew.-% auf, und es werden zur Herstellung einer stabilen Suspension 0,9 Gew.-% Dispergiermittel benötigt. Nach einer weiteren Trocknung kann der Trockenstoffanteil auf 63 Gew.-% gesteigert werden, wozu dann 1,3 Gew.-% Dispergiermittel erforderlich sind. Alle Dispergiermittelmengenangaben beziehen sich auf den Feststoffgehalt der Suspension; der Trockenstoffgehalt wurde im Filterkuchen ermittelt.

Die hydrothermale Nachbehandlung gemäß der vorliegenden Erfindung wird in einem definierten Temperatur-Verweilzeit-Verhältnis durchgeführt. Nähere Angaben sind der beiliegenden grafischen Darstellung zu entnehmen. Der parabelförmige Kurvenast bestimmt die bei vorgegebener Temperatur T notwendige Verweilzeit t, um die erfindungsgemäß angestrebten plättchenförmigen, basischen Magnesiumcarbonate zu erhalten. Oberhalb des parabolförmigen Kurvenastes wird wasserfreies Magnesiumcarbonat mit würfelähnlicher Struktur erhalten. Unterhalb des Kurvenastes liegen dünne plättchenförmige Magnesiumcarbonate vor.

Während nach dem bisherigen Verfahren verhältnismäßig dünne Plättchen mit einem Shape-Faktor von 1 : 80 erhalten wurden, liegen bei dem erfindungsgemäßen Verfahren dickere Plättchen mit einem Shape-Faktor von ca. 1 : 25 vor. Dieses Produkt ist daher sehr günstig in der Papierindustrie einsetzbar.

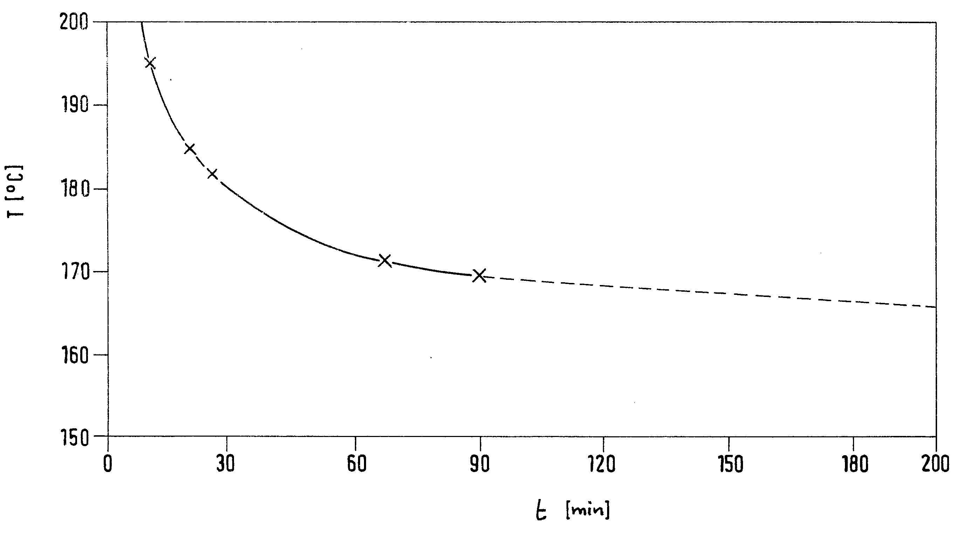

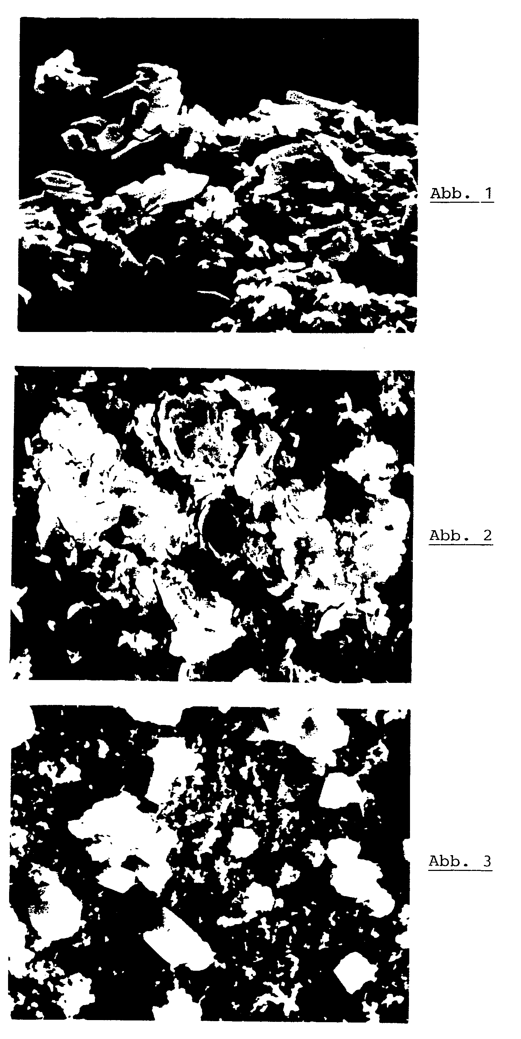

Zur Demonstration des mit dem erfindungsgemäßen Verfahren erhaltenen plättchenförmigen, basischen Calcium-Magnesium-Carbonatgemisches wird die Abb. 1 vorgelegt. Aus dieser Abbildung sind die dicken plättchenförmigen Magnesiumcarbonate zu erkennen, die von den kleineren Calciumcarbonatteilchen umgeben sind. Zum Vergleich dazu ist in Abb. 2 das nach dem bisherigen Verfahren gemäß DE-A-2 600 485 hergestellte Calcium-Magnesium-Carbonatgemisch dargestellt. Das plättchenförmige Magnesiumcarbonat ist hier sehr viel dünner und blattförmig ausgefranst.

In Abb. 3 ist ein wasserfreies Magnesiumcarbonat mit würfelähnlicher Struktur zu erkennen. Dieses bildet sich, wie oben dargestellt, bei der hydrothermalen Nachbehandlung außerhalb des erfindungsgemäßen Temperatur-Verweilzeit-Verhältnisses.

Die in den Abbildungen 1 bis 3 erkennbaren Magnesiumcarbonate weisen im Durchschnitt folgende Shape-Faktoren auf:

Abb. 1:  Shape-Faktor 1 : 25
Abb. 2:  Shape-Faktor 1 : 80
Abb. 3:  Würfelstruktur mit Shape-Faktoren von etwa 1 : 1.

Aus den erfindungsgemäß hergestellten plättchenförmigen, basischen Magnesiumcarbonaten mit einem Shape-Faktor von 1 : 25 wird unter Zusatz von 1 Gew.-% Dispergiermittel ein Streichpigment zur Herstellung von glänzendem Papier produziert. Dieses Streichpigment läßt sich hervorragend verarbeiten und liefert eine gegenüber dem bekannten Verfahren nochmals gesteigerte Oberflächengüte.

**Patentansprüche**

1. Verfahren zur Herstellung einer wäßrigen Suspension von Carbonaten des Calciums oder/und Magnesium aus Dolomit, wobei man den Dolomit durch Erhitzen auf etwa 1000 − 1100°C in ein Gemisch von Calciumoxid und Magnesiumoxid umwandelt, das erhaltene Oxidgemisch im Gewichtsverhältnis von wenigstens 20 Teilen Wasser auf 1 Teil Oxid in Wasser suspendiert und die dabei in der Suspension gebildete Hydroxide durch Einleiten von Kohlendioxid in die entsprechenden Carbonate zurückverwandelt nach DE-A-26 00 485, dadurch gekennzeichnet, daß die carbonathaltige Suspension in einem für die hydrothermale Behandlung geeigneten Druckgefäß auf eine Temperatur über 160°C gebracht und so lange gehalten wird, bis sich plättchenförmige, basische Magnesiumcarbonate mit einem Shape-Faktor von weniger als 1 : 30 gebildet haben.

2. Verfahren nach Anspruch 1, dadurch gekennzeichnet, daß die hydrothermale Behandlung in einem Rohrreaktor stattfindet, wobei die Suspension kontinuierlich auf 175—180°C erhitzt wird und die Verweilzeit insgesamt 25 Minuten beträgt.

3. Verfahren nach Anspruch 1, dadurch gekennzeichnet, daß die hydrothermale Behandlung in einem Autoklaven bei 170°C für 90 Minuten stattfindet.

4. Verfahren nach einem der vorhergehenden Ansprüche, dadurch gekennzeichnet, daß die Suspension im Anschluß an die hydrothermale Behandlung eingeengt wird.

5. Verfahren nach Anspruch 4, dadurch gekennzeichnet, daß die eingeengte Suspension einer weiteren Trocknung unterzogen wird.

6. Verfahren nach einem der vorhergehenden Ansprüche, dadurch gekennzeichnet, daß der Suspension nach der hydrothermalen Behandlung 0,5—2 Gew.-% Dispergiermittel zugesetzt werden.

## Claims

1. A method of producing an aqueous suspension of carbonates of calcium or/and Magnesium from dolomite, wherein the dolomite is converted into a mixture of calcium oxide and magnesium oxide by heating to approx. 1000—1100°C, whereafter the resultant oxide mixture is suspended in water in the proportion by weight of at least 20 parts of water to 1 part of the oxides and wherein the hydroxides which form in the suspension are converted back to the corresponding carbonates by the introduction of carbon dioxide according to DE-A-26 00 485 characterized by that the carbonate-containing suspension is heated to a temperature above 160°C in a pressurized vessel suitable for hydrothermal treatment and maintained at such temperature until lamellar, basic magnesium carbonates of a Shape factor of less than 1 : 30 have formed.

2. A method as claimed in claim 1, wherein the hydrothermal treatment is performed in a tubular reactor, the suspension is continuously heated to 175—180°C and the total duration of treatment amounting to 25 minutes.

3. A method as claimed in claim 1, wherein the hydrothermal treatment is performed in an autoclave at 170°C for 90 minutes.

4. A method as claimed in any one of the preceding claims, wherein the suspension is concentrated after the hydrothermal treatment.

5. A method as claimed in claim 4, wherein the concentrated suspension is subjected to another drying step.

6. A method as claimed in any one of the preceding claims, wherein 0.5—2% by weight of dispersing agent are added to the suspension after the hydrothermal treatment.

## Revendications

1. Procédé pour la fabrication à partir de dolomie d'une suspension aqueuse de carbonates de calcium ou/et magnésium consistant en la transformation de la dolomie par chauffage à une température de 1000 à 1100°C en un mélange d'oxyde de calcium et d'oxyde de magnésium, en la mise en suspension dans l'eau le élange d'oxydes obtenu dans un rapport d'au moins 20 parties d'eau pour une partie d'oxyde et en la transformation des hydroxydes formés dans la suspension en carbonates correspondants par introduction du bi-oxyde de carbone selon DE-A-26 00 485, caractérisé par le fait que la suspension à base de carbone est amenée dans un récipient à pression convenant à un traitement hydrothermal à une température dépassant 160°C et y est maintenue jusqu'à ce qu'il se soit formé des carbonates basiques de magnésium sous forme de petites plaques d'in facteur Shape de moins de 1 : 30.

2. Procédé selon revendication 1, caractérisé par le fait que le traitement hydrothermal a lieu dans un réacteur à tubes, la suspension étant échauffée en continu à 175—180°C et la durée total de traitement étant de 25 minutes.

3. Procédé selon revendication 1, caractérisé par le fait que le traitement hydrothermal a lieu dans un autoclave à 170°C pendant 90 minutes.

4. Procédé selon une des revendications précédentes, caractérisé par le fait que la suspension est concentrée après le traitement hydrothermal.

5. Procédé selon revendication 4, caractérisé par le fait que la suspension concentrée est soumise à un autre séchage.

6. Procédé selon une des revendications précédente, caractérisé par le fait qu'un agent de dispersion est ajouté à un taux de 0,5 à 2% en poids à la dispersion après le traitement hydrothermal.

0 010 643

Abb. 1

Abb. 2

Abb. 3